# EUROPEAN PATENT SPECIFICATION

(11) **EP 3 531 697 B1**
(45) Date of publication and mention of the grant of the patent: **18.06.2025**
(21) Application number: 17861330.3
(22) Date of filing: 02.10.2017
(51) Int. Cl.: H04N 23/50

(54) **IMAGING CAMERA AND MULTI-EYE IMAGING DEVICE**
BILDGEBUNGSKAMERA UND MEHRAUGENBILDGEBUNGSVORRICHTUNG
CAMÉRA D'IMAGERIE, ET DISPOSITIF D'IMAGERIE MULTI- IL

(30) Priority: 21.10.2016 JP 2016206790
(43) Date of publication of application: 28.08.2019
(73) Proprietor: Hitachi Astemo, Ltd., Hitachinaka-shi, Ibaraki 312-8503 (JP)
(72) Inventor: YAMAGUCHI, Akihiro, Tokyo 100-8280 (JP); SHINOHARA, Hidenori, Hitachinaka-shi, Ibaraki 312-8503 (JP); TAKEUCHI, Kenichi, Hitachinaka-shi, Ibaraki 312-8503 (JP); KUDO, Hiroyuki, Hitachinaka-shi, Ibaraki 312-8503 (JP)
(74) Representative: Strehl & Partner mbB
(86) International application number: PCT/JP2017/035786
(87) International publication number: WO 2018/074204

(56) References cited:
- JP-A- 2006 086 672
- JP-A- 2007 110 594
- JP-A- 2008 153 720
- JP-A- 2009 224 857
- JP-A- 2012 155 102
- US-A1- 2012 243 862
- US-A1- 2015 029 313
- US-A1- 2016 337 561

## Description

### Technical Field

The present invention relates to an image pickup camera and a multi-eye image pickup device, and relates to, for example, a coupling structure of a lens component and an image pickup element.

### Background Art

For example, PTL 1 (JP 2014-179795 A) discloses a solid-state image pickup device including a protruding portion on a wiring substrate. At a predetermined distance from an adhesion region between a holder and the wiring substrate, the protruding portion is formed along the adhesion region and adhesive for bonding the holder to the wiring substrate is applied to the protruding portion. PTL 2 (JP 2008-191552 A) discloses an adhesion connector for components to be mutually adhered, in which an end-edge portion of one component abuts to and adheres, with adhesive, to the other component. Each side in the thickness direction of the leading end of the end-edge portion has a recess formed thereon. An abutting protrusion between the recesses adheres to the other component with the adhesive, and the recess on each side houses an excess of the adhesive.

The document JP 2007 110594 A discloses an image pickup device according to the preamble of claim 1.

### Citation List

### Patent Literature

PTL 1: JP 2014-179795 A
PTL 2: JP 2008-191552 A

### Summary of Invention

### Technical Problem

PTL 1 or PTL 2 discloses the configuration of an image pickup camera in which a holder holding a lens and a wiring substrate on which an image pickup element is mounted are secured with adhesive. However, for the configuration of the image pickup camera described in PTL 1 or PTL 2, there is a risk that occurrence of flowing or separating of securing material, such as the adhesive, during manufacturing may cause soiling of the image pickup element, a crack, or a reduction in adhesion strength.

The present invention has been made in consideration of the problem, and an object of the present invention is to provide an image pickup camera and a multi-eye image pickup device that can inhibit the flowing of securing material from occurring during manufacturing.

The object, another object, and novel features of the present invention will be clarified with the descriptions herein and the accompanying drawings.

### Solution to Problem

The invention proposes to solve the above problem by providing an image pickup camera according to claim 1.

### Advantageous Effects of Invention

According to the embodiment described above, flowing of securing material can be inhibited from occurring during manufacturing.

### Brief Description of Drawings

[FIG. 1] FIG. 1(a) is a perspective view of an exemplary schematic configuration of an image pickup camera according to a first embodiment of the present invention, and FIG. 1(b) is a plan view of an exemplary structure of a holding member in FIG. 1(a).
[FIG. 2] FIG. 2(a) is a plan view of an exemplary outer shape of the image pickup camera of FIG. 1(a) that has been assembled, and FIG. 2(b) is a sectional view of an exemplary structure taken along line A-A' of FIG. 2(a).
[FIG. 3] FIG. 3(a) is a perspective view of exemplary shapes of a recess and securing material in the image pickup camera of FIGS. 1(a) and 1(b), and FIG. 3(b) is an enlarged plan view of a part of FIG. 3(a).
[FIG. 4] FIGS. 4(a) and 4(b) illustrate a first comparative example of FIGS. 3(a) and 3(b), respectively.
[FIG. 5] FIGS. 5(a), 5(b), and 5(c) are sectional views for describing a mechanism for acquiring the shapes in FIGS. 3(a) and 3(b).
[FIG. 6] FIG. 6(a) is a perspective view of an exemplary detailed structure of the holding member of FIG. 3(a), and FIG. 6(b) is a perspective view of a second comparative example of FIG. 6(a).
[FIG. 7] FIG. 7(a) is a perspective view of an exemplary structure of the vicinity of a holding member in an image pickup camera according to a second embodiment of the present invention, and FIG. 7(b) is an enlarged plan view of a part of FIG. 7(a).
[FIG. 8] FIG. 8(a) is a perspective view of an exemplary structure of the vicinity of a holding member in an image pickup camera according to a third embodiment of the present invention, and FIG. 8(b) is an enlarged plan view of a part of FIG. 8(a).
[FIG. 9] FIGS. 9(a) and 9(b) are respectively sectional views of an exemplary structure of the vicinity of a holding member in an image pickup camera according to a fourth embodiment of the present invention.
[FIG. 10] FIG. 10 is a perspective view of an exemplary schematic configuration of a multi-eye image pickup device according to a fifth embodiment of the present invention.
[FIG. 11] FIG. 11 is a sectional view of an exemplary schematic structure of the multi-eye image pickup device of FIG. 10.
[FIG. 12] FIG. 12 is a sectional view of a comparative example of FIG. 11.

### Description of Embodiments

Each embodiment will be described, as necessary for convenience, with division into a plurality of sections or a plurality of embodiments. Unless otherwise specified, those are related to each other. For example, one is related to a modification, detail, or supplementary explanation of the entirety or part of another. In a case where referring to the number of elements (including number of pieces, numerical value, quantity, and range are included) in each embodiment, unless otherwise specified or obviously theoretically limited to a specific number, the number of elements is not limited to the specific number, and thus may be not less than or not more than the specific number.

Furthermore, needless to say, the constituent elements of each embodiment (including elemental steps) are not necessarily essential unless otherwise specified or obviously theoretically considered to be essential. Similarly, when referring to the shape and positional relationship of each constituent element in each embodiment, unless otherwise specified or obviously theoretically contradicted, a shape substantially approximate to or similar to the shape thereof is included. This is applicable to the numerical value and the range, similarly.

The embodiments of the present invention will be described in detail below on the basis of the drawings. Note that the same members are denoted with the same reference signs, in principle, in all figures for describing the embodiments, and the descriptions thereof will not be repeated.

### (First Embodiment)

### <<Configuration of Image Pickup Camera>>

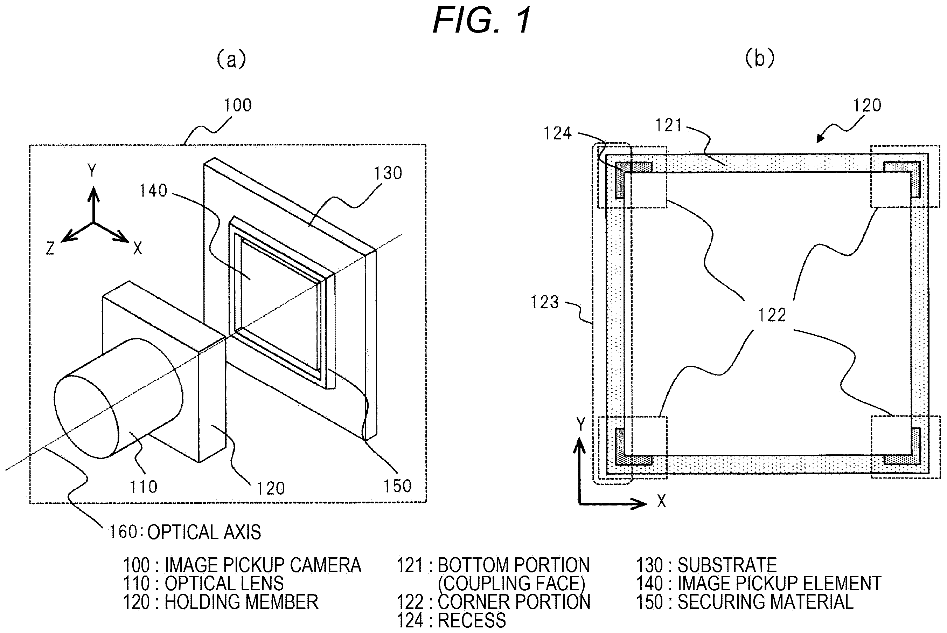

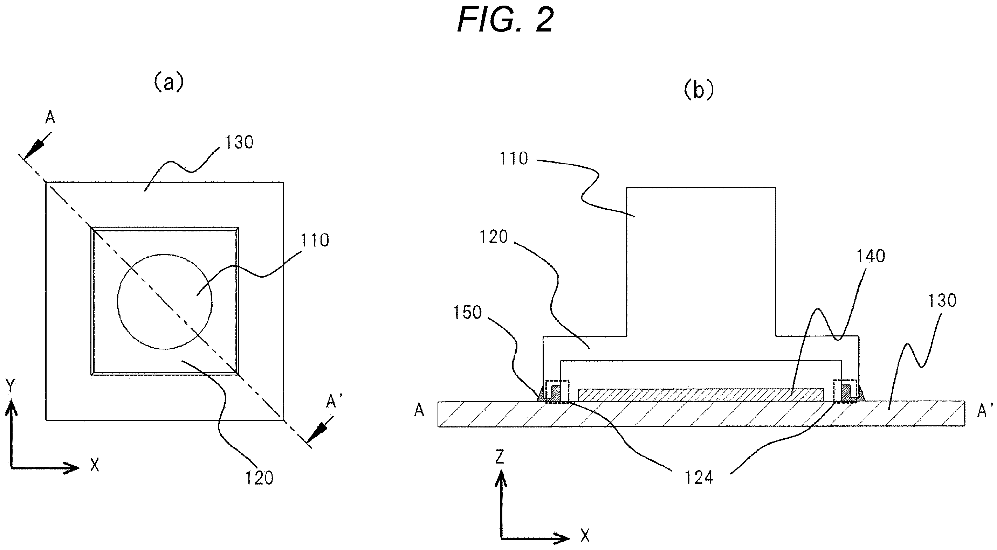

FIG. 1(a) is a perspective view of an exemplary schematic configuration of an image pickup camera according to a first embodiment of the present invention, and FIG. 1(b) is a plan view of an exemplary structure of a holding member in FIG. 1(a). FIG. 2(a) is a plan view of an exemplary outer shape of the image pickup camera of FIG. 1(a) that has been assembled, and FIG. 2(b) is a sectional view of an exemplary structure taken along line A-A' of FIG. 2(a).

The image pickup camera 100 illustrated in FIG. 1(a) includes an optical lens 110, the holding member 120, a substrate 130, an image pickup element 140, and securing material 150. The optical lens 110 is held and secured by the holding member 120, resulting in integration with the holding member 120. The substrate 130 has the image pickup element 140 mounted thereon, and the securing material 150 for securing the substrate 130 and the holding member 120 is applied on the periphery of the image pickup element 140 on the substrate 130. A representative example of the image pickup element 140 is a CMOS image sensor or a CCD image sensor.

As illustrated in FIG. 1(b), the holding member 120 has a bottom portion (coupling face) 121 that is a looped face opposed to the substrate 130 and that is secured to the substrate 130 through the securing material 150. One section in the loop direction of the bottom portion 121 includes a corner portion 122. Here, the holding member 120 has a recess 124 open toward the image pickup element 140, at the corner portion 122. In this example, the bottom portion 121 includes four corner portions 122, and each of the four corner portions 122 is provided with the recess 124.

As illustrated in FIGS. 1(a), 1(b), and 2(b), with the bottom portion (coupling face) 121 of the holding member 120 abutting on the securing material 150, the holding member 120 is secured to the substrate 130, through the securing material 150 in a state of surrounding the periphery of the image pickup element 140. At this time, the holding member 120 and the substrate 130 are secured such that the optical axis 160 of the optical lens 110 integrated with the holding member 120 is substantially perpendicular to the image pickup face of the image pickup element 140 and the focus of the optical lens 110 substantially agrees with the image pickup element 140.

During manufacturing, the securing material 150 in melt is applied to the substrate 130, and solidifies at a securing position determined between the holding member 120 and the substrate 130, resulting in securing of the holding member 120 and the substrate 130. It is considered that specific examples of the securing material 150 include any material that varies from melt to solidification, such as adhesive, resin, and solder.

This arrangement enables the optical lens 110 to form visual information (subject image) acquired from outside, on the image pickup element 130, so that the image pickup camera 100 acquires an outside image.

### <<Details of Holding Member and Vicinity of Securing Material>>

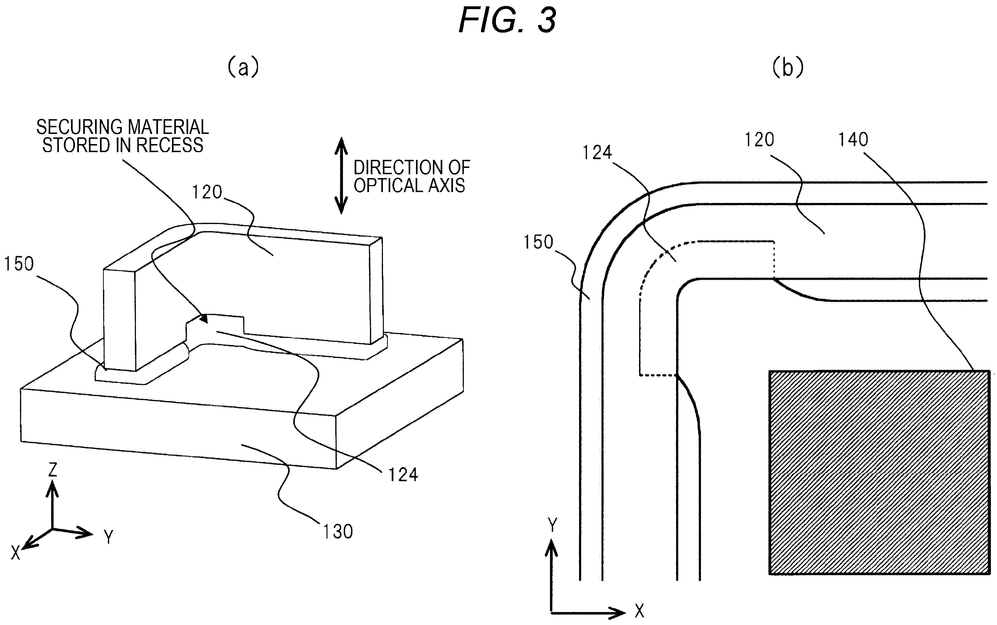

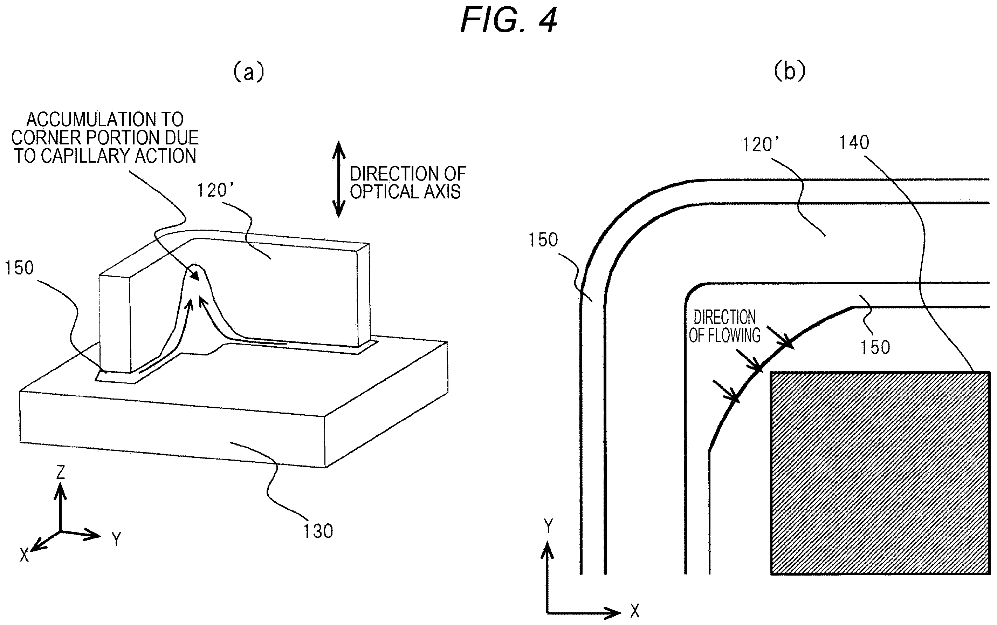

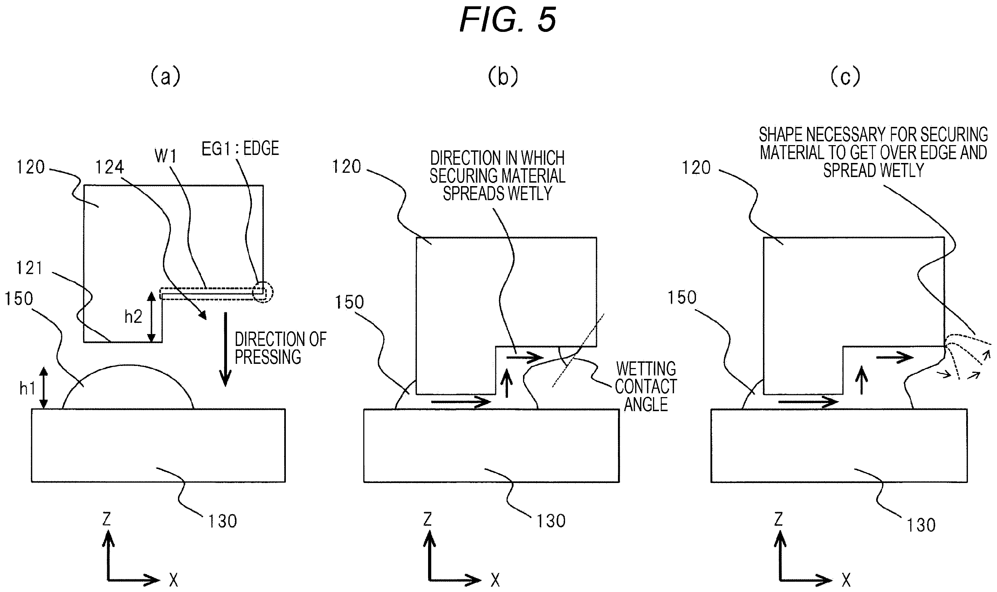

FIG. 3(a) is a perspective view of exemplary shapes of the recess and the securing material in the image pickup camera of FIGS. 1(a) and 1(b), and FIG. 3(b) is an enlarged plan view of a part of FIG. 3(a). FIGS. 4(a) and 4 (b) illustrate a first comparative example of FIGS. 3(a) and 3(b), respectively. FIGS. 5(a), 5(b), and 5(c) are sectional views for describing a mechanism for acquiring the shape of FIGS. 3(a) and 3(b).

For the image pickup camera 100, generally, it is ideal that the optical lens 110 and the image pickup element 140 has a positional relationship where the optical axis 160 of the optical lens 110 is perpendicular to the image pickup face of the image pickup element 140 and the focal position of the optical lens 110 agrees with the image pickup face of the image pickup element 140. In order to achieve such a positional relationship, the manufacturing process of the image pickup camera 100 includes a process of adjusting the positional relationship between the optical lens 110 and the image pickup element 140 and a process of solidifying the securing material 150 in melt at an adjusted position. As a result, desired optical performance is acquired.

However, as illustrated in FIG. 4(a), if a holding member 120' with an optical lens, abutting on securing material 150 has no recess 124 at a corner portion 122, in some cases, the securing material 150 in melt accumulates at the corner portion of the holding member 120' due to surface tension. This phenomenon results from capillary action, and an inner wall located at the corner portion of the holding member 120' functions as a thin tube.

Such a state causes, as illustrated in FIG. 4(b), the securing material 150 that has accumulated at the corner portion, to flow and spread, resulting in adhesion of the securing material 150 to an image pickup element 140. There is a risk that the securing material 150 adhering thereto may cause soil of the image pickup element 140 or a crack due to thermal stress. Furthermore, the accumulation of the securing material 150 at the corner portion causes, in some cases, a reduction in the applied amount of the securing material 150 at side portions excluding the corner portion of the holding member 120'. As a result, there is a risk that occurrence of thinning or separating of the securing material 150 at the side portions of the holding member 120' may cause a reduction in securing strength.

Thus, as illustrated in FIGS. 3(a) and 3(b), the holding member 120 in the image pickup camera 100 according to the first embodiment has the recess 124 open toward the image pickup element 140, at the corner portion. Such a structure causes a shape in which the securing material 150 at the corner portion is stored inside the recess 124, so that the securing material 150 is inhibited from accumulating not more than the capacity of the recess 124 at the corner portion.

As a result, as illustrated in FIG. 3(b), the securing material 150 is inhibited from flowing and spreading toward the image pickup element 140, so that the securing material 150 can be prevented from adhering to the image pickup element 140. Furthermore, the securing material 150 cannot accumulate at the corner portion greatly over the capacity of the recess 124. Thus, the securing material 150 is inhibited from reducing at the side portions, so that the securing material 150 can be prevented from thinning or separating.

A mechanism of storing the securing material 150 at the corner portion inside the recess 124 can be described on the basis of the wetting and spreading behavior of the securing material 150 at the holding member 120. As illustrated in FIG. 5(a), pressing the bottom portion (coupling face) 121 of the holding member 120 against the securing material 150, causes the recess 124 to suck the securing material 150 due to capillary action. As illustrated in FIG. 5(b), the wetting shape of the securing material 150 is temporarily formed.

As illustrated in FIG. 5(b), in a state where the securing material 150 adheres to the upper wall W1 of the recess 124, the securing material 150 spreads wetly while generally keeping a wetting contact angle determined by the balance between the surface tension of the securing material 150, the surface tension of the holding member 120, and the interfacial tension between the securing material 150 and the holding member 120. However, for wetting spread of the securing material 150 over the edge EG1 of the upper wall W1, as illustrated in FIG. 5(c), the securing material 150 needs to spread wetly through the shape of the securing material 150 having a contact angle larger than that in the state of FIG. 5(b).

For the wetting spread through such a shape of the securing material 150, a large supply of securing material 150 and driving force for strong wetting spread are required in comparison to the state of FIG. 5(b). Thus, the securing material 150 that has risen wetly at the corner portion due to the capillary action cannot get over the edge EG1 of the recess 124 formed at the corner portion. This mechanism causes the recess 124 to suck the securing material 150, resulting in further storage of the securing material 150 inside the recess 124.

Note that, in FIG. 5(a), preferably, the size h2 in the height direction of the recess 124 is larger than the size h1 in the height direction of the securing material 150 that has been applied on the substrate 130. This is because, if the size h2 of the recess 124 is smaller than the size h1 of the securing material 150, there is a risk that the securing material 150 is likely to get over the edge EG1 at the instant when the holding member 120 is pressed against the securing material 150 as in FIG. 5(a).

### <<Main Effect according to First Embodiment>>

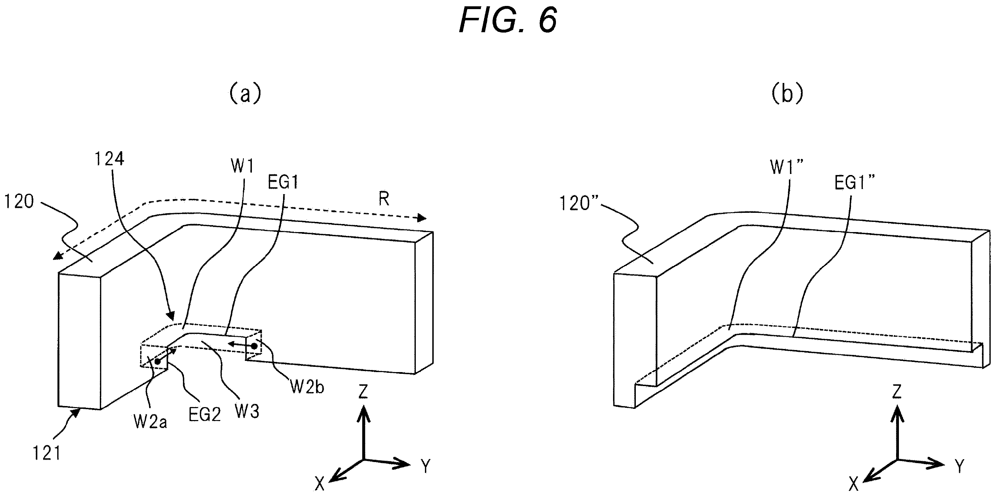

FIG. 6(a) is a perspective view of an exemplary detailed structure of the holding member of FIG. 3(a), and FIG. 6(b) is a perspective view of a second comparative example of FIG. 6(a). As described above, with the holding member 120 secured to the substrate 130, the recess 124 forms a space closed by a wall except for the side on which the image pickup element 140 is mounted. Specifically, as illustrated in FIG. 6(a), the recess 124 has the upper wall W1, side walls W2a and W2b, and a rear wall W3. The upper wall W1 is a wall intersecting with the perpendicular direction (Z-axis direction) of a face of the substrate 130. Each of the side walls W2a and W2b is a wall intersecting with the loop direction R of the bottom portion (coupling face) 121. The rear wall W3 is a wall intersecting with the direction from the inner circumferential side to the outer circumferential side of the bottom portion 121.

In FIG. 6(a), the wetting of the securing material is deterred from getting over the edge EG1 of the upper wall W1 as described in FIG. 5(c). Furthermore, because of a similar reason, the wetting of the securing material is deterred from getting over the edge EG2 of each of the side walls W2a and W2b. The two deterrents store the securing material inside the recess 124.

As a result, as described above, flowing of the securing material 150 toward the image pickup element 140 can be inhibited from occurring during manufacturing. Furthermore, the securing material 150 is inhibited from reducing at the side portions, in accordance with the capacity of the recess 124, so that the securing material 150 can be prevented from thinning or separating. Prevention of the securing material 150 from thinning or separating, enables constant retention of the positional relationship between the holding member 120 (furthermore, the optical lens 110) and the substrate 130, and enables sufficient retention of the coupling strength between the holding member 120 and the substrate 130.

Meanwhile, FIG. 6(b) illustrates a holding member 120" having a recess, which is not limited to a corner portion, over the entire inner circumference of a bottom portion, differently from the structure of FIG. 6(a). In this case, securing material spreads wetly in the recess from the corner portion as the starting point, similarly to the case of FIG. 4(a). On this occasion, the edge EG1" of an upper wall W1" deters the wetting spread of the securing material, differently from the case of FIG. 4(a).

However, the deterrent due to the edge EG2 of each side wall in the structure of FIG. 6(a) does not work in the structure of FIG. 6(b). Thus, the deterrent to the wetting spread of the securing material is insufficient, so that the securing material may not be sufficiently inhibited from flowing and spreading toward an image pickup element. Because no side walls W2a and W2b are provided, the accumulation amount of the securing material to the corner portion is difficult to control. Thus, there is a risk that the securing material 150 may become thin or separate at side portions. Thus, use of the structure as in FIG. 6(a) is advantageous.

Note that, in a case where the securing material solidifies in the recess 124 of FIG. 6(a), the side walls W2a and W2b each can catch, as tensile force, force in the perpendicular direction of the wall, as illustrated in FIG. 6(a). As a result, the use of the structure of FIG. 6(a) allows, in some cases, further improvement of the coupling strength between the holding member 120 and the substrate 130 (particularly, shear strength) in comparison to the structure of FIG. 4(a) or the structure of FIG. 6(b).

### (Second Embodiment)

### <<Details of Holding Member and Vicinity of Securing Material (Modification)>>

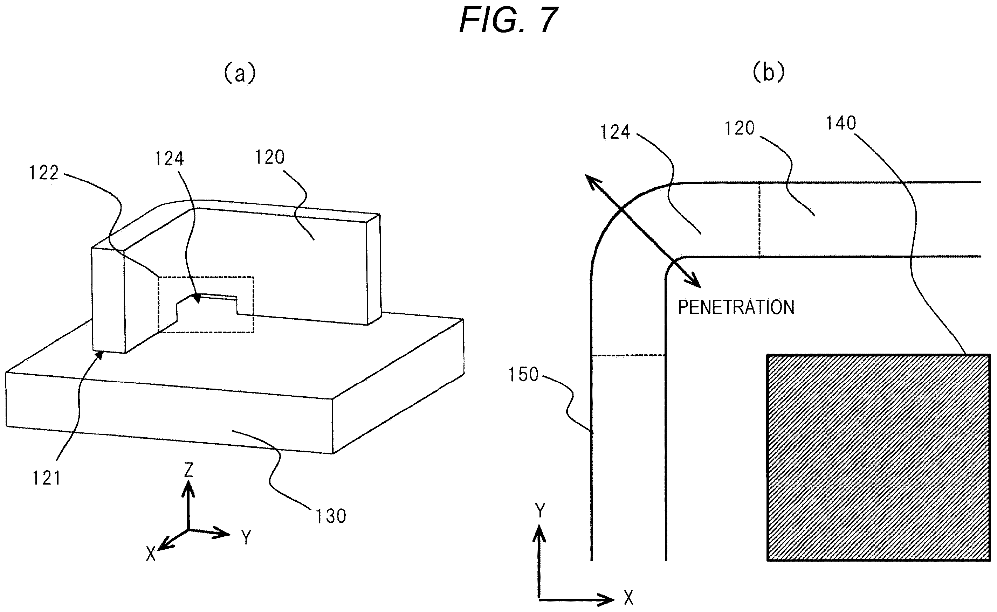

FIG. 7(a) is a perspective view of an exemplary structure of the vicinity of a holding member in an image pickup camera according to a second embodiment of the present invention, and FIG. 7(b) is an enlarged plan view of a part of FIG. 7(a). The image pickup camera according to the second embodiment is different from the image pickup camera according to the first embodiment in terms of the shape of a recess 124 of the holding member 120. In FIGS. 7(a) and 7(b), the recess 124 provided at a corner portion 122 forms a tunnel-like space penetrating between the inner circumference and the outer circumference of a looped bottom portion (coupling face) 121, with the holding member 120 secured to a substrate 130.

Use of the image pickup camera according to the second embodiment enables acquisition of a similar effect to that according to the first embodiment, and additionally causes securing material 150 to have more difficulty in accumulating on the image pickup element 140 side of the corner portion 124 in comparison to the case according to the first embodiment. Thus, in some cases, the securing material 150 can be further inhibited from flowing and spreading toward the image pickup element 140. Note that, for example, depending on the quality of the securing material 150, external light possibly leaks toward the image pickup element 140 through the recess 124. Thus, from this point, the structure according to the first embodiment is preferable.

### (Third Embodiment)

### <<Details of Holding Member and Vicinity of Securing Material (Modification)>>

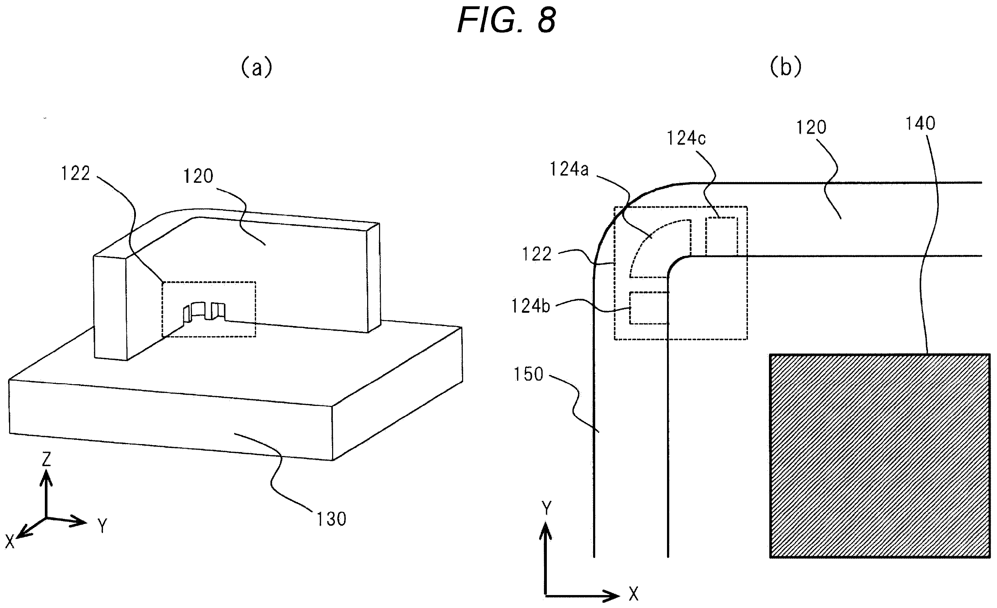

FIG. 8(a) is a perspective view of an exemplary structure of the vicinity of a holding member in an image pickup camera according to a third embodiment of the present invention, and FIG. 8(b) is an enlarged plan view of a part of FIG. 8(a). The image pickup camera according to the third embodiment is different from the image pickup camera according to the first embodiment in that, as illustrated in FIGS. 8(a) and 8(b), a plurality of recesses 124a, 124b, and 124c (here, three recesses) is provided at a corner portion 122 of the holding member 120.

For example, a recess 124 provided at the corner portion as illustrated in FIGS. 3(a) and 3(b), functions as a capillary that sucks the securing material 150, and serves to confine the securing material 150 sucked, inside the recess 124. The capacity of the recess 124 is determined in consideration of, for example, how much of the total amount of the securing material 150 should be distributed to the side portions. Here, if the recess 124 requires increasing in capacity, for example, the interval between the side walls W2a and W2b illustrated in FIG. 6(a) requires widening.

In this case, the recess 124 functions as a thick capillary. Thus, there is a risk that the suction force for the securing material 150 may be weakened, and additionally the confining force for the securing material 150 sucked inside the recess 124 may also be weakened. Thus, as in FIGS. 8(a) and 8(b), the provision of the plurality of recesses 124a, 124b, and 124c at the one corner portion 122 is advantageous. In this case, each of the recesses 124a, 124b, and 124c functioning as a thin capillary strongly sucks securing material 150, and additionally can confine the securing material 150 sucked inside the recess due to strong force.

Use of the image pickup camera according to the third embodiment enables acquisition of a similar effect to that according to the first embodiment, and additionally causes the plurality of recesses to actively to suck the securing material 150 due to capillary action and store the securing material 150 inside, in comparison to the case according to the first embodiment. Thus, the securing material 150 can be further inhibited from flowing and spreading toward an image pickup element 140. Even a case where the entire capacity of the recesses requires increasing to some extent can be handled, resulting in further improvement of the degree of freedom in determination of the capacity of the recesses.

### (Fourth Embodiment)

### <<Details of Holding Member and Vicinity of Securing Material (Modification)>>

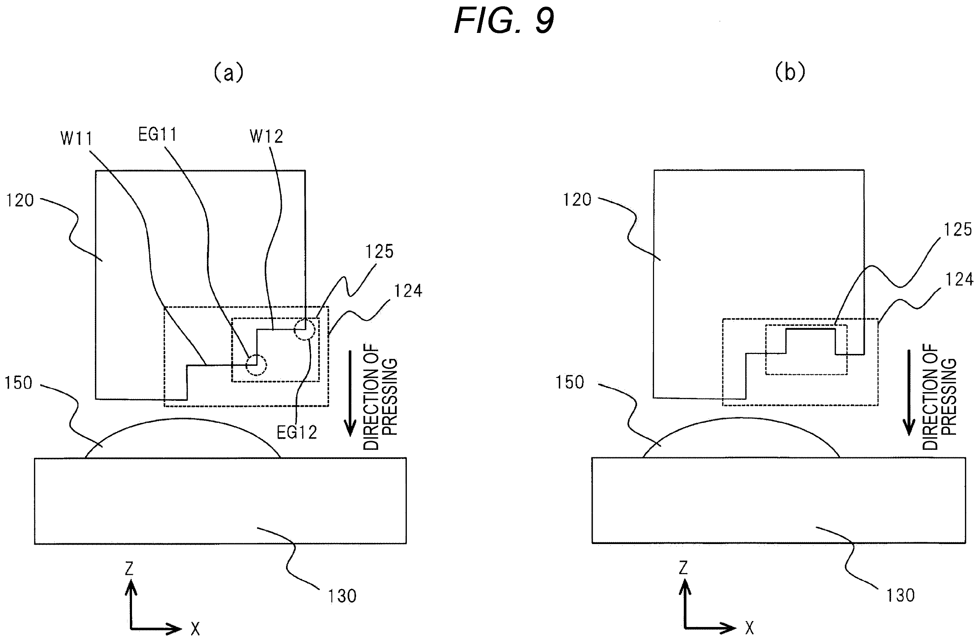

FIGS. 9(a) and 9(b) are respectively sectional views of an exemplary structure of the vicinity of a holding member in an image pickup camera according to a fourth embodiment of the present invention. The image pickup camera according to the fourth embodiment is different from the image pickup camera according to the first embodiment in terms of the shape of a recess 124 of the holding member 120. FIGS. 9(a) and 9(b) illustrate that the recess 124 is further provided with a second recess 125. The recess 124 and the second recess 125 form a stepwise stage when viewed on a plane (XZ plane) in the perpendicular direction of a face of a substrate 130.

Use of the image pickup camera according to the fourth embodiment enables acquisition of a similar effect to that according to the first embodiment, and additionally enables further reliable storage of securing material 150 inside the recess 124 in comparison to the case according to the first embodiment. Specifically, as described in FIG. 5(a), for example, in a case where the size h1 in the height direction of the securing material 150 is larger than the size h2 in the height direction of the recess 124 due to a factor of some kind, there is a risk that the securing material 150 may get over the edge EG1. Meanwhile, in FIG. 9(a) (similarly, in FIG. 9(b)), the provision of the second recess 125 causes stepwise disposition of upper walls W11 and W12 and edges EG11 and EG12. Thus, even if the securing material 150 gets over the edge EG11, the edge EG12 can deter the wetting of the securing material.

### (Fifth Embodiment)

### <<Configuration of Multi-Eye Image Pickup Device>>

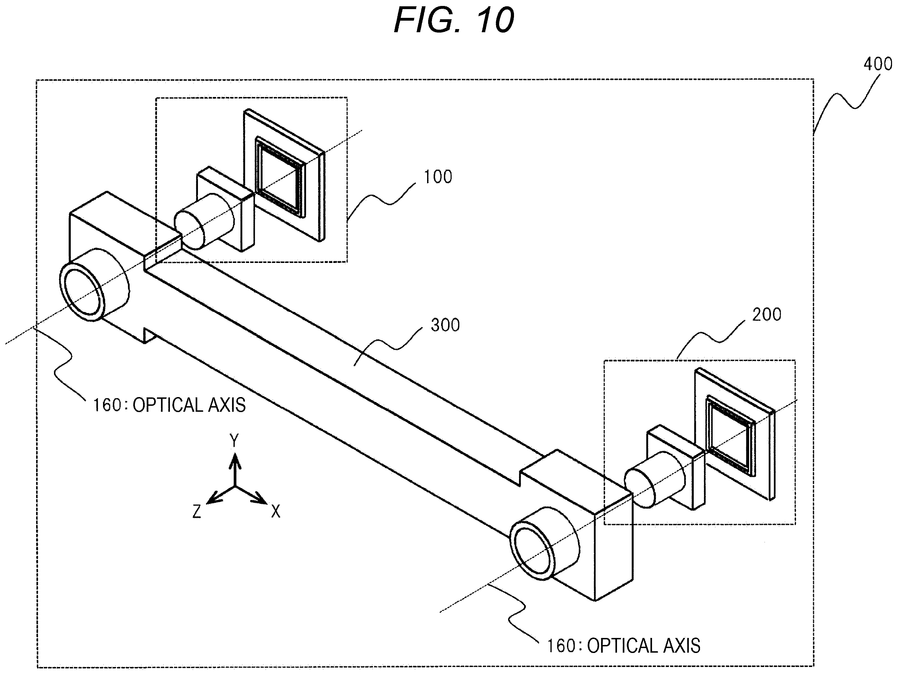

FIG. 10 is a perspective view of an exemplary schematic configuration of a multi-eye image pickup device according to a fifth embodiment of the present invention. The multi-eye image pickup device 400 illustrated in FIG. 10 includes an image pickup camera 100, a second image pickup camera 200, and a casing 300. The second image pickup camera 200 has a structure equivalent to that of the image pickup camera 100. The casing 300 secures the image pickup camera 100 and the second image pickup camera 200 at positions separated by a predetermined distance such that the respective optical axes 160 of the image pickup camera 100 and the second image pickup camera 200 are substantially parallel.

The multi-eye image pickup device 400 detects identical points between respective images acquired by the image pickup camera 100 and the second image pickup camera 200 and combines both of the images, to generate a range image including outside three-dimensional information. Thus, when the multi-eye image pickup device 400 acquires outside range information, the respective optical characteristics of the image pickup cameras include in the multi-eye image pickup device 400 are preferably identical.

An example of the optical characteristic of each image pickup camera related to the acquisition of the range information is the response characteristic of a focal position to temperature (hereinafter, referred to as a defocus temperature characteristic). For example, in a case where there is a large difference between the respective defocus temperature characteristics of the image pickup cameras included in the multi-eye image pickup device 400, a variation occurs in resolution between respective images acquired by the image pickup cameras when the outside temperature varies. Such a state causes the multi-eye image pickup device 400 to have difficulty in detecting identical points between the respective images acquired by the image pickup cameras, resulting in deterioration in accuracy of calculating a range in a generated range image.

The optical characteristic, such as the defocus temperature characteristic, depends on the structure or configuration of an optical lens, a holding member, securing material, an image pickup element, and a substrate included in the image pickup camera. In particular, as described above, the securing material applied in melt during manufacturing accumulates at a corner portion of the holding member and causes a variation in shape. Thus, the securing material is a main factor for a variation in optical characteristic. Thus, application of any of the configurations described in the first to fourth embodiments to each of the image pickup camera 100 and the second image pickup camera 200 is advantageous.

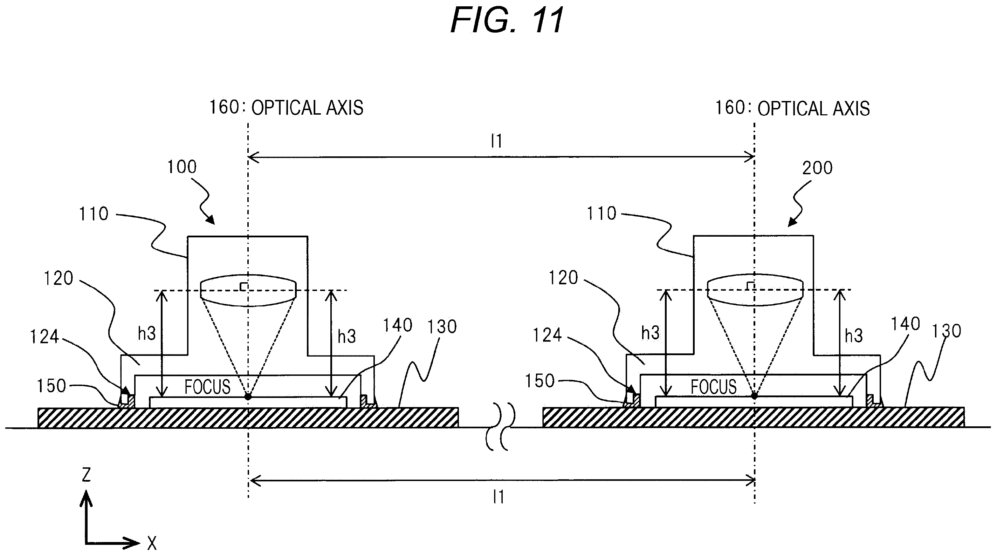

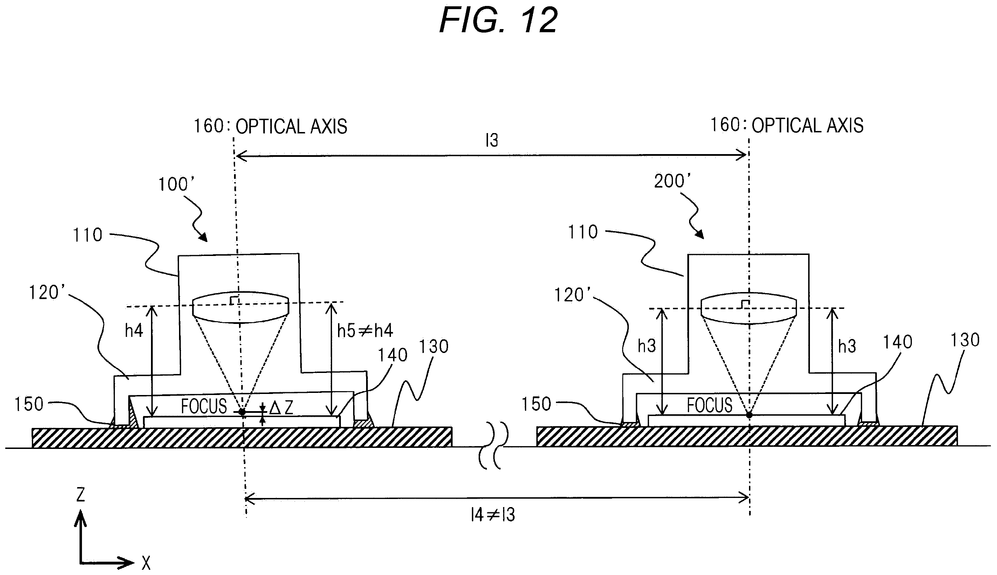

FIG. 11 is a sectional view of an exemplary schematic structure of the multi-eye image pickup device of FIG. 10, and FIG. 12 is a sectional view of a comparative example of FIG. 11. According to the comparative example of FIG. 12, each of an image pickup camera 100' and a second image pickup camera 200' includes the holding member 120' illustrated in FIGS. 4(a) and 4(b). In this case, as illustrated in FIG. 12, the respective optical axes 160 of the image pickup camera 100' and the second image pickup camera 200' are not parallel, resulting in an event in which the positional relationship between an optical lens 110 and an image pickup element 140 of the image pickup camera 100' is different from the positional relationship between an optical lens 110 and an image pickup element 140 of the second image pickup camera 200'. As a result, only the image pickup element 140 in one of the two image pickup cameras is available for focusing, and it may be difficult to detect identical points between respective images acquired by the image pickup cameras.

The example of FIG. 12 indicates the image pickup camera 100' having a difference in the accumulation amount of securing material 150 between two corner portions due to occurrence of misalignment during pressing the holding member 120' against the securing material 150. The difference causes, in some cases, for example, that the amount of the securing material 150 at side portions of the holding member 120' is different every side portion. Thus, there is a risk that the optical axis 160 may incline. Furthermore, the difference in the accumulation amount of securing material 150 between the two corner portions causes, in some cases, adhesion force at the two corner portions to vary along with outside temperature. As a result, even if the optical axis 160 has no inclination during manufacturing, the optical axis 160 may incline along with a variation in outside temperature.

Meanwhile, use of the multi-eye image pickup device according to the fifth embodiment, enables, as described in each embodiment, substantially constant retention of the accumulation amount of securing material 150 at each corner portion, in accordance with the capacity of a recess 124. This arrangement enables substantially constant retention of the amount of the securing material 150 at side portions of each holding member 120, at each side portion, and enables substantially constant retention of adhesion force at each corner portion regardless of outside temperature. As a result, as illustrated in FIG. 11, the optical axes 160 of the image pickup camera 100 and the second image pickup camera 200 can be retained in parallel, so that identical points between respective images acquired by the image pickup cameras can be detected easily.

The use of the multi-eye image pickup device according to the fifth embodiment enables acquisition of a similar effect to those according to the first to fourth embodiments, and additionally enables inhibition of a variation in the shape of the securing material in each image pickup camera. Thus, the range calculating accuracy of the multi-eye image pickup device can be prevented from deteriorating due to a factor, such as a variation in temperature.

The present invention made by the present inventors has been specifically described above on the basis of the embodiments..

According to each embodiment described above, the case where the planar shape formed with the inner circumference of the bottom portion (coupling face) of the holding member is a quadrangle having four corner portions has been exemplified. Note that the planar shape is not limited to the quadrangle, and is required at least to have a shape having at least one corner portion. For example, even when the planar shape is entirely substantially circular, if a corner portion is present for some reason in the section of part thereof, application of each embodiment described above enables occurrence of a similar phenomenon advantageously. Note that the corner portion has two lines intersecting at an angle of θ (0 < θ < 180°).

### Reference Signs List

- 100: image pickup camera
- 110: optical lens
- 120: holding member
- 121: bottom portion (coupling face)
- 122: corner portion
- 123: side portion
- 124, 124a, 124b, 124c: recess
- 125: second recess
- 130: substrate
- 140: image pickup element
- 150: securing material
- 160: optical axis
- 200: second image pickup camera
- 300: casing
- 400: multi-eye image pickup device
- EG1, EG2, EG11, EG12: edge
- W1, W2a, W2b, W3, W11, W12: wall

## Claims

1. An image pickup camera comprising:
a substrate (130) on which an image pickup element (140) is mounted;
an optical lens (110) configured to form a subject image on the image pickup element (140);
a holding member (120) holding the optical lens and surrounding a periphery of the image pickup element; and
securing material (150) securing the substrate and the holding member (120),
wherein the holding member (120) has a coupling face (121) that is a quadrangular or substantially circular ring-shaped face opposed to the substrate (130), the coupling face (121) being secured to the substrate through the securing material (150),
one section in a peripheral direction of the coupling face (121) includes a corner portion (122),
the holding member (120) has at least one recess (124) open toward a side of the substrate (130) and toward a side of the image pickup element (140),
the recess (124) has an upper wall (W1), positioned so as to face and to be spaced apart from an upper surface of the substrate (130),
wherein the recess (124) is formed at the corner portion (122),
wherein, with the holding member (120) secured to the substrate (130), the recess (124) and the substrate (13) form a space closed by a wall except for the side of the image pickup element,
wherein the coupling face (121) has a plurality of the corner portions (122),
**characterized in that** one recess (124) is provided at each of the plurality of the corner portions (122) and has side walls (W2a, W2b) perpendicular to the peripheral direction of the coupling face (121), wherein the side walls (W2a, W2b) and the upper wall (W1) include right-angled edges (EG1, EG2) deterring the wetting of the securing material (150) from getting over the edge (EG1, EG2) of each of the side walls (W2a, W2b) and the top wall (W1).

2. The image pickup camera according to claim 1,
wherein the upper wall (W1) intersects with a direction perpendicular to a face of the substrate (130), and
the recess (124) has
a rear wall (W3) intersecting with a direction from an inner circumferential side to an outer circumferential side of the coupling face (121).

3. The image pickup camera according to claim 1,
wherein a plurality of the recesses (124a, 124b, 124c) is provided at one of the corner portions (122).

4. The image pickup camera according to claim 1,
wherein the upper wall (W1) of the recess (124) is further provided with a second recess (125), and
the recess (124) and the second recess (125) form a stepwise stage when viewed on a plane in a perpendicular direction of a face of the substrate (130).

5. The image pickup camera according to claim 1,
wherein, with the holding member (120) secured to the substrate (130), the recess (124) forms a tunnel-like space penetrating between an inner circumference and an outer circumference of the coupling face (121).

## Patentansprüche

1. Bildaufnahmegerät, umfassend:
ein Substrat (130), auf dem ein Bildaufnahmeelement (140) angebracht ist;
eine Optiklinse (110), die dafür ausgelegt ist, ein Motivbild auf dem Bildaufnahmeelement (140) zu erzeugen;
ein Halteelement (120), das die Optiklinse hält und einen Umfangsbereich des Bildaufnahmeelements umgibt; und
ein Befestigungsmaterial (150), das das Substrat und das Halteelement (120) befestigt,
wobei das Halteelement (120) eine Kopplungsfläche (121) aufweist, die eine viereckige oder im Wesentlichen kreisförmige ringförmige Fläche ist, die dem Substrat (130) gegenüberliegt, wobei die Kopplungsfläche (121) durch das Befestigungsmaterial (150) an dem Substrat befestigt ist, ein Abschnitt in einer Umfangsrichtung der Kopplungsfläche (121) einen Eckbereich (122) umfasst,
das Halteelement (120) mindestens eine Ausnehmung (124) aufweist, die zu einer Seite des Substrats (130) und zu einer Seite des Bildaufnahmeelements (140) hin offen ist, die Ausnehmung (124) eine obere Wand (W1) aufweist, die so positioniert ist, dass sie einer oberen Oberfläche des Substrats (130) gegenüberliegt und von dieser beabstandet ist,
wobei die Ausnehmung (124) an dem Eckbereich (122) ausgebildet ist,
wobei die Ausnehmung (124) und das Substrat (13) mit an dem Substrat (130) befestigtem Halteelement (120) einen Raum bilden, der mit Ausnahme der Seite des Bildaufnahmeelements von einer Wand umschlossen ist,
wobei die Kopplungsfläche (121) mehrere der Eckbereiche (122) aufweist,
**dadurch gekennzeichnet, dass**
an jedem der mehreren Eckbereiche (122) eine Ausnehmung (124) vorgesehen ist und Seitenwände (W2a, W2b) aufweist, die senkrecht zu der Umfangsrichtung der Kopplungsfläche (121) verlaufen,
wobei die Seitenwände (W2a, W2b) und die obere Wand (W1) rechtwinklige Kanten (EG1, EG2) umfassen, die das Benetzen des Befestigungsmaterials (150) über die Kante (EG1, EG2) jeder der Seitenwände (W2a, W2b) und der oberen Wand (W1) verhindern.

2. Bildaufnahmegerät nach Anspruch 1,
wobei die obere Wand (W1) eine Richtung schneidet, die senkrecht zu einer Fläche des Substrats (130) verläuft, und
die Ausnehmung (124) eine hintere Wand (W3) aufweist, die eine Richtung von einer inneren Umfangsseite zu einer äußeren Umfangsseite der Kopplungsfläche (121) schneidet.

3. Bildaufnahmegerät nach Anspruch 1,
wobei mehrere der Ausnehmungen (124a, 124b, 124c) an einem der Eckbereiche (122) vorgesehen sind.

4. Bildaufnahmegerät nach Anspruch 1,
wobei die obere Wand (W1) der Ausnehmung (124) ferner mit einer zweiten Ausnehmung (125) versehen ist und
die Ausnehmung (124) und die zweite Ausnehmung (125) eine stufenförmige Stufe bilden, wenn sie in einer Ebene in einer Richtung senkrecht zu einer Fläche des Substrats (130) betrachtet werden.

5. Bildaufnahmegerät nach Anspruch 1,
wobei die Ausnehmung (124) mit an dem Substrat (130) befestigtem Halteelement (120) einen tunnelartigen Raum bildet, der zwischen einem inneren Umfang und einem äußeren Umfang der Kopplungsfläche (121) hindurchtritt.

## Revendications

1. Caméra de capture d'images comprenant :
un substrat (130) sur lequel un élément (140) de capture d'images est monté ;
une lentille optique (110) configurée pour former une image de sujet sur l'élément (140) de capture d'images ;
un élément (120) de maintien maintenant la lentille optique et entourant une périphérie de l'élément de capture d'images ; et
un matériau de fixation (150) fixant le substrat et l'élément (120) de maintien,
dans laquelle l'élément (120) de maintien a une face (121) de couplage qui est une face en forme de bague quadrangulaire ou sensiblement circulaire opposée au substrat (130), la face (121) de couplage étant fixée au substrat par l'intermédiaire du matériau de fixation (150),
une section dans un sens périphérique de la face (121) de couplage inclut une partie d'angle (122),
l'élément (120) de maintien a au moins un renfoncement (124) ouvert vers un côté du substrat (130) et vers un côté de l'élément (140) de capture d'images,
le renfoncement (124) a une paroi supérieure (W1), positionnée de façon à faire face à et à être espacée d'une surface supérieure du substrat (130),
dans laquelle le renfoncement (124) est formé au niveau de la partie d'angle (122),
dans laquelle, avec l'élément (120) de maintien fixé au substrat (130), le renfoncement (124) et le substrat (130) forment un espace fermé par une paroi à l'exception du côté de l'élément de capture d'images,
dans laquelle la face (121) de couplage a une pluralité des parties d'angle (122),
**caractérisée en ce qu'**un renfoncement (124) est prévu au niveau de chacune de la pluralité des parties d'angle (122) et a des parois latérales (W2a, W2b) perpendiculaires au sens périphérique de la face (121) de couplage, dans laquelle les parois latérales (W2a, W2b) et la paroi supérieure (W1) incluent des bords (EG1, EG2) à angle droit empêchant l'humidification du matériau de fixation (150) de passer par-dessus le bord (EG1, EG2) de chacune des parois latérales (W2a, W2b) et de la paroi supérieure (W1).

2. Caméra de capture d'images selon la revendication 1,
dans laquelle la paroi supérieure (W1) coupe un sens perpendiculaire à une face du substrat (130), et
le renfoncement (124) a
une paroi arrière (W3) coupant un sens depuis un côté circonférentiel intérieur jusqu'à un côté circonférentiel extérieur de la face (121) de couplage.

3. Caméra de capture d'images selon la revendication 1,
dans laquelle une pluralité des renfoncements (124a, 124b, 124c) est prévue au niveau d'une des parties d'angle (122).

4. Caméra de capture d'images selon la revendication 1,
dans laquelle la paroi supérieure (W1) du renfoncement (124) est en outre prévue avec un deuxième renfoncement (125), et
le renfoncement (124) et le deuxième renfoncement (125) forment une platine en gradins lorsqu'ils sont vus sur un plan dans un sens perpendiculaire d'une face du substrat (130).

5. Caméra de capture d'images selon la revendication 1,
dans laquelle, avec l'élément (120) de maintien fixé au substrat (130), le renfoncement (124) forme un espace de type tunnel pénétrant entre une circonférence intérieure et une circonférence extérieure de la face (121) de couplage.
